# EUROPEAN PATENT APPLICATION

(11) **EP 3 950 754 A1**
(43) Date of publication of application: **09.02.2022**
(21) Application number: 20189786.5
(22) Date of filing: 06.08.2020
(51) Int. Cl.: C08F 297/06, B32B 27/32, C08F 4/659, C08F 295/00, C08L 23/14, C08L 53/00

(54) **LINEAR POLAR -NONPOLAR DIBLOCK COPOLYMERS**

(71) Applicant: Interface Polymers Limited, Loughborough, Leicestershire LE11 3QF (GB)
(72) Inventor: KAY, Christopher, Loughborough, Leicestershire LE11 8RA (GB); CLAYFIELD, Timothy, Cham, Zug 6330 (GB); DI NICOLA, Alessia, Loughborough, Leicestershire LE11 5DL (GB)
(74) Representative: Bawden, Peter Charles

(57) **Abstract**

A linear diblock copolymer of the general structure "Polymer A - linkage - Polymer B", wherein Polymer A is essentially a nonpolar polymeric entity being a copolymer of propylene and ethylene, with propylene representing 51 to 99 weight percent of Polymer A; and Polymer B is a polymeric polar entity; and the use of said diblock copolymer to modify polymer bulk and interfacial properties in end applications.

## Description

### Field of Invention:

The present invention relates to a linear diblock copolymer of the general structure "Polymer A - linkage - Polymer B" wherein Polymer A is essentially a nonpolar polymeric entity being a copolymer of propylene and ethylene and Polymer B is a polymeric polar entity; and to the use of said diblock copolymer to modify polymer bulk and interfacial properties in end applications.

### Background of Invention:

The plastics manufacturing industries produce a wide range of articles from a variety of different polymers which may be thermoplastic polymer or thermoset polymer materials. In producing the articles of desired performance attributes it is quite common for industry to rely on blends of different polymers in bulk; or to layer or laminate one polymer type on a second polymer type optionally with a tie-layer between the two lamella; or to fill or reinforce a bulk polymer with a filler or particulate material that may be a mineral or different polymeric material. In all these activities a significant challenge for industry is to manage interfacial and surface effects to mitigate and, if possible, avoid detrimental or inferior performance as the different polymer materials are combined in an end application. For example, a combination of tensile strength and impact resistance may be required; a combination of flexibility and surface integrity and/or a combination of stiffness and the ability to be laminated may be required; as may be printability and paintability. These challenges to industry manifest more so when attempting to manage systems where there is present a combination of polar and non-polar substances with their associated surface or bulk interactions.

A significant part of the plastics industry is orientated to the melt processing of mixtures of polymeric materials and, in many instances, it is not possible or it is very difficult to obtain homogeneous mixtures of the materials. Homogeneity is required to enable processing of the formulations into finished articles and provision of uniform properties within the finished articles. This is particularly the case with mixtures of polymeric materials which are processed in the melt such as by extrusion (including film formation), injection molding, roto molding, blow molding or thermoforming, where a homogeneous mixture of the polymers in the molten state is required for smooth processing and the production of articles having a homogeneous content. By homogeneous it is meant that the article has a substantially uniform polymer content throughout its body; included are both miscibility of the polymers and dispersion of polymers one within another.

The incompatibility of different polymers can also present a problem for the recycling of polymeric materials. Recycling is often performed by melt-mixing and reusing plastic materials; currently it is frequently necessary to prior separate different types of plastic for the resulting recovered material to be relatively homogeneous and attractive for re-use by industry. Improving the compatibility of polymers such as high-density polyethylene and polystyrenes would mean that more polymer waste and types of polymers could be recycled in the same process/reactor, without need to separate, and that the value and utility of recycled polymers can be improved.

Plastic films for example, may be laminated to other surfaces and they may require an adhesive or sealable surface to achieve good integrity. Additionally, or alternatively, they may need to be printable or paintable whilst at the same time having adequate strength and perhaps barrier properties particularly for use in the packaging industry. Additives have been proposed in order to improve the compatibility of and/or the surface properties of polymer systems. However, many of the additives are expensive and additionally do not result in the desired degree of compatibility of the polymeric materials or do not provide the desired surface effect whilst retaining the other desirable properties of the polymers. There exists a need to provide alternative polymer adjuvants able to satisfy such field performance demands.

### Summary of Invention:

The present invention addresses the above-mentioned issues by providing a novel linear diblock copolymer intended for deployment in industrial applications where management of interfacial and surface interactions is a prime consideration, especially in the systems combining, or bringing into close proximity, polar and non-polar materials.

In a first embodiment, the present invention relates to a diblock copolymer of the following general structure: 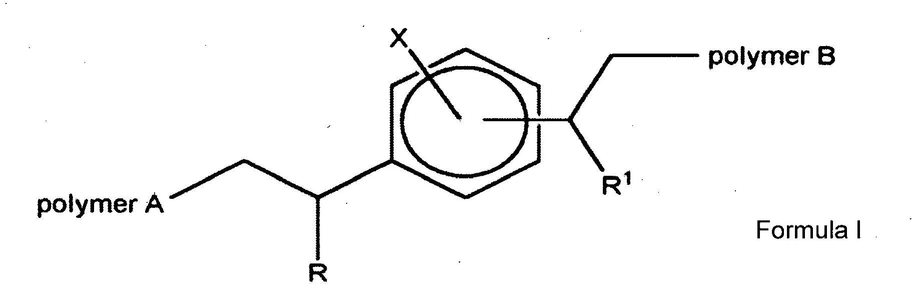 where R and R¹ may be the same or different and each independently represents an alkyl or aryl group, X may be hydrogen or a C1 to C20 alkyl group which may be branched or linear and wherein the aromatic ring substituent joined to Polymer B is positioned meta or para to the aromatic ring substituent joined to Polymer A, characterized in that:
a) Polymer A is a polymer which consists essentially of recurring units derived from propylene and ethylene, wherein the propylene content is from 51 to 99 percent based on total number average molecular weight of Polymer A with the balance to 100 percent being derived from ethylene; and
b) Polymer B is a chain of structural units derived from one or more α,β-unsaturated monomers selected from the group consisting of styrene, substituted styrene, acrylate, methacrylate, vinyl esters, fumarate esters and maleic anhydride and derivatives thereof, and diene compounds.

In another aspect, the invention relates to a polymer composition comprising a diblock copolymer as mentioned in the above first embodiment.

In a yet further aspect, the invention relates to an article comprising:
- a substrate having an outer surface; and
- a layer of a polymer composition contiguous to said outer surface of the substrate, wherein the polymer composition comprises a diblock copolymer as mentioned in the above first embodiment.

In yet a further aspect, this invention relates to the use of a diblock copolymer as mentioned in the above first embodiment as a performance enhancing additive to a polymer composition, wherein the additive is present in an amount of from 0.1 to 20 weight percent based on total weight of the polymer composition.

In yet a further aspect, this invention relates to a method of preparing the diblock copolymer as mentioned in the above first embodiment, characterized by:
a) in a first step, polymerizing propylene and ethylene in the presence of a metallocene catalyst system to form Polymer A, the said Polymer A being a chain consisting of propylenic and ethylenic structural units in which the propylene content is from 51 to 99 percent based on total number average molecular weight of Polymer A with the balance to 100 percent being derived from ethylene, the reaction being carried out in the presence of a linkage molecule of Formula II: 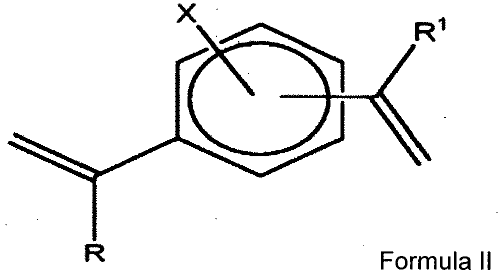 in a reaction vessel, wherein, in the course of the reaction, the linkage molecule is terminally incorporated onto Polymer A resulting in the formation of a terminally unsaturated intermediate of Formula III: 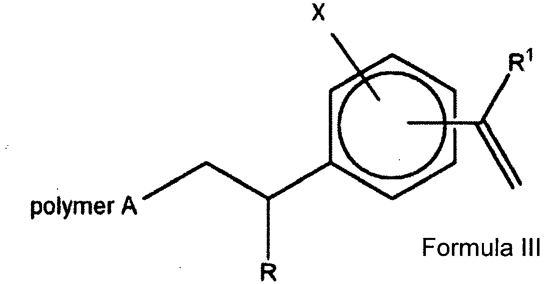
b) in an optional second step, recovering the intermediate III from the reaction mixture of the first step; and
c) in a third step, reacting the intermediate III at its terminal double bond with a polar monomer in a subsequent polymerization reaction to form Polymer B, where R, R1 and X are as previously defined.

In yet a further aspect, this invention relates to a method of manufacturing a diblock copolymer as mentioned in the above first embodiment, said process characterized by providing and charging to a reaction vessel a terminally unsaturated polymeric material corresponding to Formula III, further introducing one or more α,β-unsaturated monomers selected from the group consisting of styrene, substituted styrene, acrylate, methacrylate, vinyl esters, fumarate esters and maleic anhydride and derivatives thereof, and diene compounds, and causing said α,β-unsaturated monomers to react at its terminal unsaturation in a subsequent polymerization reaction to form and adjoin Polymer B, where R, R1 and X are as previously defined.

In yet a further aspect, this invention relates to terminally unsaturated polymeric material suitable as starting material for formation of the diblock copolymer mentioned in the above first embodiment, said terminally unsaturated material corresponding to Formula III and characterized in that Polymer A is a polymer which consists essentially of recurring units derived from propylene and ethylene, wherein the propylene content is from 51 to 99 percent based on total number average molecular weight of Polymer A with the balance to 100 percent being derived from ethylene.

In yet a further aspect, this invention relates to the use as an additive to polymer materials of a diblock copolymer of the general structure corresponding to Formula I, where R and R1 may be the same or different and each independently represents an alkyl or aryl group, X may be hydrogen or a C1 to C20 alkyl group which may be branched or linear and wherein the aromatic ring substituent joined to Polymer B is positioned meta or para to the aromatic ring substituent joined to Polymer A, characterized in that Polymer A is a non-polar polymer formed by metallocene catalyzed polymerization of propylene with ethylene, wherein the propylene content is from 51 to 99 percent based on total number average molecular weight of Polymer A with the balance to 100 percent being derived from ethylene; and Polymer B is a polymer formed by radical catalysis of a polar monomer.

### Detailed Description of the Invention:

As mentioned above the present invention pertains to a diblock copolymer of an essentially linear structure and corresponding to a structure that can be represented as "Polymer A - linkage - Polymer B" and more particularly as represented by the following structural formula: 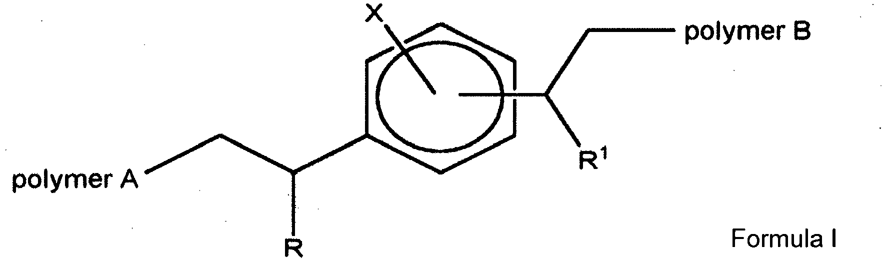 where R and R1 may be the same or different and each independently represents an alkyl or aryl group, X may be hydrogen or a C1 to C20 alkyl group which may be branched or linear and wherein the aromatic ring substituent joined to Polymer B is positioned meta or para to the aromatic ring substituent joined to Polymer A.

The diblock copolymer of the present invention is characterized by the select constitution of Polymer A and Polymer B where the nature of Polymer A, generally considered as being a non-polar entity of the diblock copolymer, and Polymer B, conversely generally considered as being a polar entity of the diblock copolymer, is defined with consideration to the nature of the two or more materials that are to be combined in a particular formulation and end application usage.

Polymer A of the present invention as depicted above in Formula I is a polymeric chain consisting essentially of repeat structural units derived from propylene and ethylene monomers; the chain is rich in structural units derived from propylene and has a propylene-derived content of from 51 to 99 percent based on total number average molecular weight of Polymer A with the balance to 100 percent being derived from ethylene. In a preferred embodiment the propylene derived content is from 55 percent, and more preferably from 60 percent, and independently up to 97 percent, more preferably up to 95 percent, with the balance to 100 percent being derived from ethylene. In a highly preferred embodiment of the invention, Polymer A is derived from propylene and ethylene monomers, wherein the propylene content is from 55 to 95 percent and the ethylene content is from 45 to 5 percent. The number average molecular weight of Polymer A is defined by consideration to the intended application; typically, the number average molecular weight of Polymer A will range from a lower limit of 500 to an upper limit of 20,000 g mol⁻¹. The lower limit preferably is at least 1000, and more preferably at least 2000 g mol⁻¹; while the upper limit preferably is at most 15,000 and more preferably at most 10,000 g mol⁻¹. The number average molecular weight can be measured by GPC with reference to polystyrene standards in the range of 500 to 25,000 g mol⁻¹. Illustrative of a highly preferred Polymer A structure for the present invention is a polymeric structure derived from propylene and ethylene monomers, wherein the propylene content is from 55 to 95 percent and ethylene content is from 45 to 5 percent of a total number average molecular weight and wherein the number average molecular weight is from 500 to 20,000 g mol⁻¹.

Polymer B of the present invention is a chain of structural units derived from one or more α,β-unsaturated monomers selected from the group consisting of styrene, substituted styrene, acrylate and methacrylate esters, diene compounds, vinyl esters, fumarate esters, itaconate esters and maleic anhydride and derivatives thereof, diene compounds, and combinations of two or more thereof. The number average molecular weight of Polymer B is variable and selected with consideration to the intended end use; typically, Polymer B will have a number average molecular weight ranging from a lower limit of 1000 to an upper limit of 100,000 g mol⁻¹. The lower limit preferably is at least 2000, and more preferably at least 5000; while the upper limit preferably is at most 70,000 and more preferably at most 40,000 g mol⁻¹. In one preferred embodiment, Polymer B consists of a homo- or copolymeric chain derived from one or more acrylate or methacrylate monomers. In particular, the (meth)acrylate monomer or monomers selected for polymer B comprise one or more (meth)acrylate compounds bearing a C4-C22 alkyl substituent, which may be branched or straight chain alkyl. In an example of a preferred material used in this invention polymer B consists of a homo- or polymeric chain derived from one or more such monomers. Examples of such monomers are: 2-ethyl hexyl (meth)acrylate, isodecyl (meth)acrylate, t-butyl (meth)acrylate, dodecyl (meth)acrylate, decyl (meth)acrylate, and those with a C12-C15 chain length. In another preferred-embodiment, polymer B consists of a homo- or copolymeric chain derived from one or more vinyl ester monomers. Examples include vinyl acetate, vinyl 2-ethylhexanoate, vinyl octanoate, vinyl benzoate, vinyl decanoate, vinyl neodecanoate, vinyl pivalate, vinyl propionate, vinyl stearate and vinyl valerate. In yet another preferred embodiment, Polymer B consists of a chain of structural units derived from one or more diene compounds. These dienes may be unhydrogenated, hydrogenated or partially hydrogenated dienes. More preferably, the second block of the copolymer consists of a homo- or copolymeric chain derived from isoprene, piperylene or butadiene, or a mixture thereof. In another preferred embodiment Polymer B consists of a chain of styrenic structural units derived from styrene or derivatives thereof such as alpha methyl styrene and para alkyl styrene, for instance methyl and butyl styrene.

With reference to Formula I above, a particularly preferred diblock copolymer of the present invention is a diblock copolymer wherein Polymer A is a polymeric structure derived from propylene and ethylene monomers, wherein the propylene content is from 55 to 95 percent and the ethylene content is from 45 to 5 percent of a total number average molecular weight and wherein the number average molecular weight is from 500 to 20,000 g mol⁻¹; and Polymer B is a chain of structural units derived from one or more α,β-unsaturated monomers selected from the group consisting of acrylate, methacrylate, vinyl esters, fumarate esters and maleic anhydride and having a number average molecular weight ranging from 1000 to 100,000 g mol⁻¹.

As noted above, Polymer A and Polymer B are connected by a "linkage entity". The linkage entity is derived from a substance corresponding to Formula II: 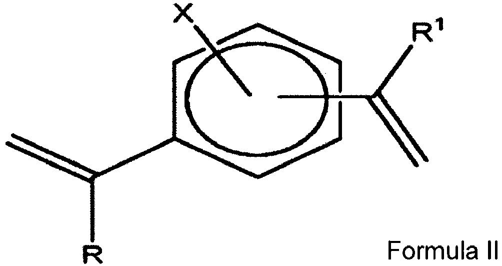 where R and R1 may be the same or different and each independently represents an alkyl or aryl group, X may be hydrogen or a C₁ to C₂₀ alkyl group which may be branched or linear and wherein the aromatic ring substituent is positioned in a meta- or para-substitution arrangement. Preferably, each R and R¹ group independently represents an alkyl group having from 1 to 4 carbon atoms; more preferably, R and R¹ are the same and most preferably are both methyl. Preferably, the aromatic ring substituent is a meta-substitution arrangement. Exemplary of a preferred substance for use as the linkage entity is 1,3-di-(isopropenyl)benzene.

The diblock copolymers of the present invention can be prepared by a general procedure summarized as comprising, in a first step, bringing propylene and ethylene monomers together and causing them to react and polymerize in the presence of the linkage substance. This provides for an "intermediate product" bearing Polymer A and which in a subsequent second step is brought into contact with the chosen α,β-unsaturated monomers under reactive conditions causing these α,β-unsaturated monomers to polymerize and thereby resulting in an adjoined Polymer B. The mentioned "intermediate product" corresponds to the general Formula III: 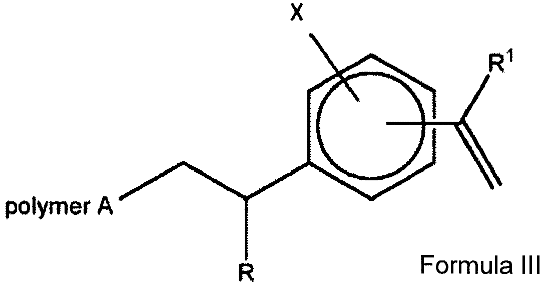 wherein Polymer A, R, R¹ and X are as previously described hereinabove including their mentioned preferred embodiments. For convenience of subsequently preparing multiple diblock copolymers, where the nature and makeup of Polymer B can vary, optionally but to advantage the intermediate product may be recovered and isolated from the first reaction, prior to the second polymerization step. More specifically the diblock copolymers of this invention may be prepared by
a) in a first step, polymerizing propylene and ethylene in the presence of a metallocene catalyst system to form Polymer A, said Polymer A being a chain consisting of propylenic and ethylenic structural units, the reaction being carried out in the presence of a linkage molecule of Formula II in a reaction vessel, wherein, in the course of the reaction, the linkage molecule is terminally incorporated onto Polymer A resulting in the formation of a terminally unsaturated (double bond) intermediate of Formula III;
b) in an optional second step, recovering the intermediate III from the reaction mixture of the first step; and
c) in a subsequent step, reacting the intermediate III at its terminal double bond with a polar monomer in a subsequent polymerization reaction to form Polymer B, where R, R1 and X are as previously defined.

Optionally step a) may be performed under hydrogen pressure in order to control the characteristics of Polymer A. In this specification, the word "terminal" when used in relation to a polymer chain (or block) simply refers to the end of the polymer chain (or block), and does not convey any additional mechanistic requirement that the chain (or block) end in question be the end at which the polymerization reaction terminated. References to "terminally" shall be construed analogously.

The subsequent polymerization reaction or the third step may be an anionic or free radical-initiated reaction, though preference is for a radical polymerization. This manner of producing diblock copolymers is presented in the literature in the patent publications EP2684940, WO2017046009 and WO2019063836, the teachings of which are incorporated herein by reference. The production of Polymer B by radical polymerization is more versatile than the production by anionic polymerization as being easier to control and providing for materials that are more readily purified. Radical polymerization is also more versatile in the range of monomers that may be polymerized, and it is easier to control molecular weight within a selected range as compared to anionic polymerization methods. The process aspect of step c) is preferably carried out in the presence of a radical source. As will be known in the art, such a radical source may be a chemical initiator species, or it may be an external physical energy input such as UV light or other radiation source. Preferably the radical source is a chemical initiator species such as a peroxide initiator, an azo-initiator or other such species.

Accordingly use of radical polymerization to produce Polymer B enables the structure of the final diblock copolymer to be more easily tailored to the use for which it is designed. The selection of the chemical nature, the structure and physical properties of combinations of Polymer A and Polymer B can therefore be tailored according to the particular use envisaged for the diblock copolymer and with respect to the other materials present in the end applications and conferring the desired compatibility.

It is important that Polymer A be terminally joined to Polymer B, giving a generically linear molecule and leaving Polymer A available for interacting with the bulk polymer system with which it is intended to be deployed. This is somewhat analogous to a surfactant having lipophilic/lipophobic characteristics in the same molecular structure and permitting lipophilic and lipophobic substance to be combined in a stabilized system. As such, it is important that the linkage entity between Polymer A and Polymer B be positioned at the end of the polymeric chain of Polymer A.

To achieve this terminal positioning of the linkage entity between Polymer A and Polymer B, it is essential that the process by which the copolymer is made be specific for staging a terminal functionalization of Polymer A. The choice of metallocene catalysis in the first step of the manufacturing process appears to favorably promote such terminal functionalization. Equally, it is important that the terminal functionalization formed on Polymer A be sufficiently reactive to enable the subsequent formation of Polymer B under radical polymerization conditions that are practical from an industrial aspect, whilst at the same time not being so highly reactive that unwanted side reactions occur to a significant extent.

Suitable metallocene catalysts for the production of polymer A comprise a transition metal, particularly a metal from group IV of the periodic table such as Ti, Zr or Hf, with one or more ligands such as cyclopentadienyl ("Cp"), substituted cyclopentadienyl (including indenyl, fluorenyl and their derivatives), and bridged variants of the above. Additional ligands may be coordinated or bonded to the metal by heteroatoms such as N, O, S or P and may include bridges to Cp-type ligands as above. Such catalysts are normally synthesized and stored as a metal dichloride/dialkyl (e.g. dibenzyl) or mono-alkyl-mono-chloride species ("pre-catalyst"). This is activated in solution by addition of a co-catalyst, generally methylaluminoxane (MAO), but alternatively a non/weakly-coordinating anion may be used such as a combination of a boron-containing species such as Ph3C+ B(C6F5)4- and a trialkylaluminium species such as i-(C4H9)3AI. Examples of such catalysts include Cp2MCl2, Cp<*>2MCl2, EBIMCl2, Flu(Ph2Me)CpMCl2, and Cp(Me)4(Me2Si)NtBuMCl2, wherein M represents a transition metal. Preferred catalysts are catalysts in which M represents zirconium. An example catalyst is Cp2ZrCI2 together with a co-catalyst. The diblock copolymers of the present invention are eminently suitable for end applications which can exploit their unique polar - nonpolar dichotomy as a means of modifying the polymer interfacial and bulk properties to the systems in which they are present. In effect the copolymers of the present invention can function as compatibilization agents, solubilization agents, adhesive agents, or dispersion agents.

The following are examples of possible use applications of the materials of the invention:
- Additives for polypropylene, including PP-based waxes. The additive can be designed to modify hardness, viscosity, impact properties and the surface or interfacial properties of polypropylene. The modification of the surface can also lead to improved properties such as surface adhesion of coatings, anti-adhesion, friction, surface tension etc..
- Viscosity modifiers for polymers, providing strength, viscosity, etc., for all polymer processing methods used in the manufacture of molded articles, films, and fibers.
- Additives for improving the dispersion of various commonly used polymer additives (e.g. plasticizers, rheology modifiers, lubricants, release agents, antioxidants, anti-UV agents, fillers, foaming agents, recycled materials, etc.) and also for improving biodegradability, friction, conductivity, tribology, and electromagnetic interactions by dispersing the particles responsible for such interactions.
- Additives for mixtures of polymers, from the melt, particularly (but not exclusively) solvent-free systems: This includes mixtures of polyolefin-polar polymers e.g. polyolefin blends with polystyrene, polyamide, EVOH, PET, ABS, TPU, etc..
- Additives for the processing of mixed polymers:
   o all molding applications (including, but not limited by, injection, roto, compression, compression transfer, slush and blow molding, and thermoforming).
   o all extrusion applications (including, but not limited by, pipe and tube, coextrusion, film formation, coating, laminating, blown-film, tie-layers, calendering, welding etc.).
   ∘ all casting applications.
- Additives for mixed polymers formulations:
   ∘ hot melt adhesives (HMAs). PO-based. EVA-based
   ∘ pressure-sensitive adhesives (PSA). SBC-based. Acrylic-based.
   ∘ water-based adhesives (WBA). Acrylic-based.
- Additives for heavy oil fractions including bitumen modification.
- Additives to control polymer foaming.
- Additives for viscosity and dispersion control in preventative systems, e.g. anticorrosion formulations.
- Additives for polymer composites (including reinforced materials, nano-composites and bio-composites).
- Additives for construction materials, such as panel boards, to modify viscosity, dispersion and control wax coatings.
- Additives for carbon-based composites such as carbon black, graphene or carbon nanotube (CNT)-filled composites.
- Additives for "smart" material composites such as polymer composites containing materials which interact with electromagnetic radiation.
- Additives for bio-composites such as wood-plastic composites.
- Additives for dispersion of other additives and colorants in polymers.
- Additives for polymers in solution.
- Additives for viscosity modification of vegetable oils.
- Additives for water-based polymer systems, e.g. water-based formulations such as adhesives (foamable or otherwise), coatings and paints.
- Polymer additives for crystal modification:
   ∘ ethylene polymer and copolymer-based crystal modification including waxes (natural or synthetic).
   ∘ ethylene polymer and copolymer crystal modification.
   ∘ polar polymer crystal modification, such as in polyamides.

The polar/non-polar balance across the diblock copolymer of the present invention can permit the diblock copolymer to function in an analogous manner to the hydrophilic/hydrophobic balance of common surfactants making it possible to provide stable polymer-in-polymer composite blends of greater integrity, and/or dispersions of polymer-in-polymer with improved definition and improved overall physical performance traits. In this instance where the diblock copolymer functions as a compatibilization agent for non-polar and polar polymer systems it may be present in an amount of from 0.1 to 20 weight percent based on total weight of all components present including the diblock copolymer. When such composites and/or dispersions are prepared the diblock copolymer may be preblended with either the polar polymer component or the non-polar polymer component or introduced as an independent stream when bringing together the polar and non-polar polymer constituents of the composite.

The polar/non-polar balance across the copolymer can permit the diblock copolymer of the present invention to function as a cohesion promoter facilitating and promoting the surface contact cohesion of one surface to a second, different, surface of differing polarity. An example in this instance is contact coating or painting of a polymer onto a surface of different polarity which may be an organic polymeric surface or inorganic surface. In this instance the diblock copolymer of the present invention can be formulated and present in either or both substances constituting the first and or second surface.

The polar/non-polar balance across the copolymer of the diblock copolymer can also function as a wetting agent modifying the surface properties of the polymer composite where it may be present, in bulk or as a surface coating. For example, it can be used to confer anti-condensate properties to surfaces on which it is applied or to composites and blends containing the diblock copolymer. When packaging and wrapping food articles an undesirable trait is the presence of water condensation beads within the package. Presence of the diblock copolymer modifies the surface properties of the composite polymer blend, and films thereof, in a manner which mitigates the beading of water as it promotes aqueous film formation facilitating evaporation or mitigating beading.

The polar/non-polar balance across the diblock copolymer of the present invention can function in a manner to facilitate the dispersion of particulate matter, for instance fillers, within a polymer matrix. The fillers are particulate matter of small dimensions and can include natural animal or plant fibers, mineral fibers, glass, metals and such-like.

The polar/non-polar balance across the diblock copolymer of the present invention can permit the diblock copolymer to function in an analogous manner to a wax as might be commonly deployed in the role of lubricant in plastic injection molding, extrusion or pultrusion operations.

The diblock copolymer of the present invention may also be used as a "tie-layer" or adhesive to facilitate the adhesion of one surface to a second surface, wherein the diblock copolymer is placed as a discrete layer in a contiguous manner between the first and second surface.

The present invention is illustrated by reference to the following example showing preparation of a diblock copolymer for use as a polymer additive.

### Preparation of a polypropylene-polyethylene diisopropenyl benzene intermediate "PP/PE-t-DIB"

A 2 L stainless steel high-pressure reactor with heating jacket was dried under vacuum at 125°C overnight before addition of a comonomer solution (total volume 1 L) consisting of 1,3-diisopropenylbenzene (350 ml, 1.84 mol - compound I) and toluene (650 ml, 3.29 mol) with the reactor initially heated to 60°C. The reactor was filled with an alkene mixture consisting of propylene and ethylene in a mole ratio of 70:30 (100 kPa) before the coaddition of hydrogen (100 kPa). Once alkene uptake had stabilized, a toluene solution of metallocene rac-dichloroethylenbis(indenyl)zirconium(IV) (2.6×10⁻⁵ mol), methylaluminoxane (MAO) (30 ml) and toluene (20 ml) was injected. The reaction temperature was maintained at 60°C. The reaction was stopped after 120 min and the polymer product was precipitated by pouring in cold methanol (2L) with stirring for 1 hour.

The product was recovered by filtration and washed with methanol, and once dry washed again with tetrahydrofuran (200 ml). The polymer product, 1,3-diisopropenylbenzene-terminated polypropylene-polyethylene (referred to as PP/PE-t-DIB) was dried by heating to 70°C in vacuo for 24 h, giving a yield of 15.6 g. This corresponds to a productivity of 12,500 kg polymer/mol[Zr].h.

The characterization of the PP/PE-t-DIB, to confirm the desired terminal functionalization structure is obtained, can be conducted by nuclear magnetic resonance spectroscopy.

For example, NMR spectra can be recorded on Bruker DPX400 and DPX500 spectrometers, wherein <1>H and <13>C NMR spectra are referenced internally using the solvent resonances relative to tetramethylsilane. Routine NMR assignments (including polymer samples) can be confirmed by <1>H-<1>H (COSY), <13>C-<1>H (HMQC) and <13>C-<1>H (HMBC) correlation experiments where necessary.

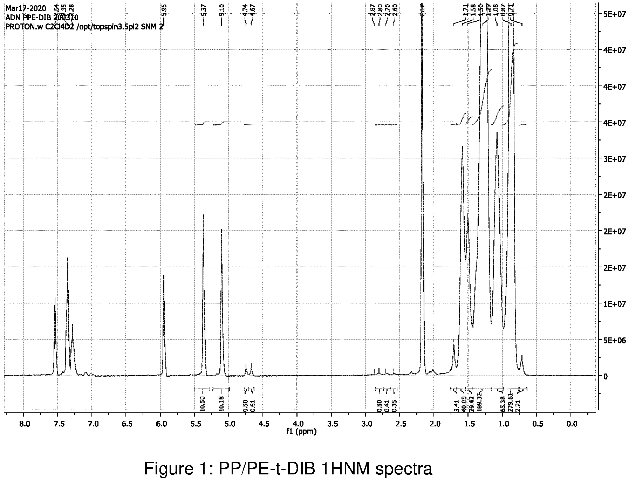

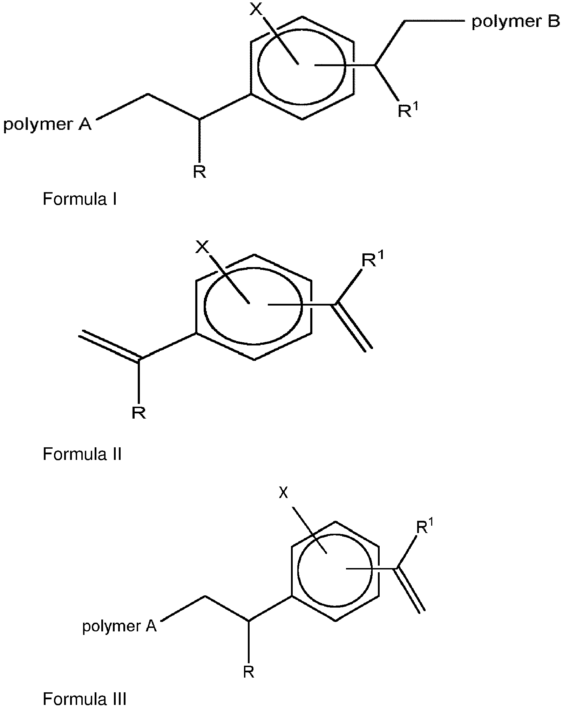

In particular, <1>H NMR spectroscopy can be employed to confirm the terminal insertion of the compound I. Figure 1 shows a typical <1>H NMR spectra for PP/PE-t-DIB as produced by the above process, where polymer A is polypropylene-polyethylene, and 1,3-diisopropenylbenzene ("1,3-DIB"). See DRAWINGS Page 1 Figure 1: PP/PE-t-DIB 1HNM spectra

## Claims

1. A diblock copolymer of the following general structure: 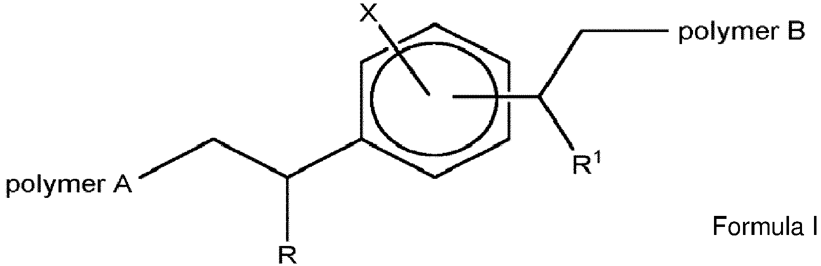 where R and R¹ may be the same or different and each independently represents an alkyl or aryl group, X may be hydrogen or a C1 to C20 alkyl group which may be branched or linear and wherein the aromatic ring substituent joined to Polymer B is positioned meta or para to the aromatic ring substituent joined to Polymer A, **characterized in that**:
a) Polymer A is a polymer which consists essentially of recurring units derived from propylene and ethylene, wherein the propylene content is from 51 to 99 percent based on total number average molecular weight of Polymer A with the balance to 100 percent being derived from ethylene; and
b) Polymer B is a chain of structural units derived from one or more α,β-unsaturated monomers selected from the group consisting of styrene, substituted styrene, acrylate, methacrylate, vinyl esters, fumarate esters and maleic anhydride and derivatives thereof, and diene compounds.

2. The diblock copolymer as claimed in Claim 1, wherein the propylene-ethylene-derived copolymer (Polymer A) has a propylene content of from 55 to 95 percent.

3. The diblock copolymer as claimed in Claim 1, wherein Polymer B is a chain of structural units derived from acrylate, methacrylate, vinyl esters, fumarate esters and maleic anhydride and derivatives thereof, or combinations of two or more thereof.

4. A polymer composition comprising a diblock copolymer as claimed in Claim 1.

5. An article comprising:
- a substrate having an outer surface; and
- a layer of a polymer composition contiguous to said outer surface of the substrate, wherein the polymer composition comprises a diblock copolymer as claimed in Claim 1.

6. Use as an additive to a polymer composition of a diblock copolymer as claimed in Claim 1, wherein the additive is present in an amount of from 0.1 to 20 weight percent based on total weight of the polymer composition including additive.

7. A method of preparing the diblock copolymer as claimed in Claim 1, **characterized by**:
a) in a first step, polymerizing propylene and ethylene in the presence of a metallocene catalyst to form Polymer A, wherein the propylene content is from 51 to 99 percent based on total number average molecular weight of Polymer A with the balance to 100 percent being derived from ethylene, the reaction being carried out in the presence of a linkage molecule of Formula II: 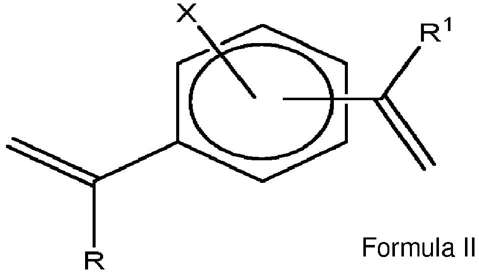 in a reaction vessel, wherein, in the course of the reaction, the linkage molecule is terminally incorporated onto Polymer A resulting in the formation of a terminally unsaturated intermediate of Formula III: 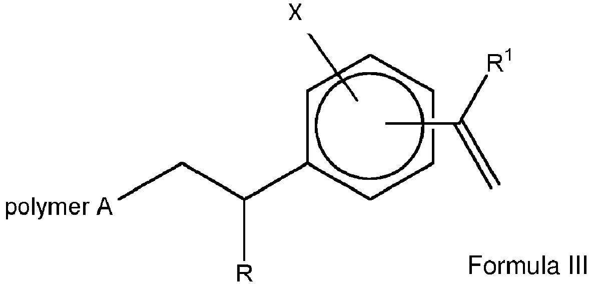
b) in an optional second step, recovering the intermediate III from the reaction mixture of the first step; and
c) in a third step, reacting the intermediate III at its terminal double bond with a polar monomer in a subsequent polymerization reaction to form Polymer B, where R, R1 and X are as previously defined.

8. A method of manufacturing a diblock copolymer as claimed in Claim 1, **characterized by** providing and charging to a reaction vessel a terminally unsaturated polymeric material corresponding to Formula III, further introducing to the reaction vessel one or more α,β-unsaturated monomers selected from the group consisting of styrene, substituted styrene, acrylate, methacrylate, vinyl esters, fumarate esters and maleic anhydride and derivatives thereof, and diene compounds, and causing said α,β-unsaturated monomers to react at its terminal unsaturation in a subsequent polymerization reaction to form and adjoin Polymer B, where R, R1 and X are as previously defined.

9. A polymer suitable for preparing a diblock copolymer as claimed in Claim 1, where said polymer corresponds to the following Formula III: 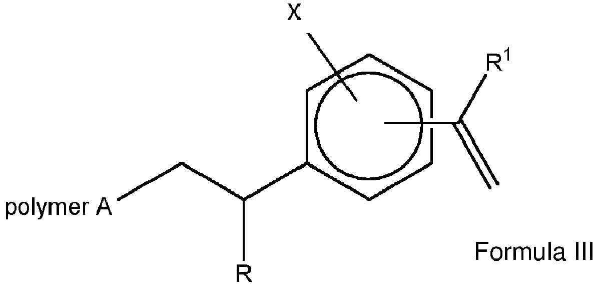 where R and R¹ may be the same or different and each independently represents an alkyl or aryl group, X may be hydrogen or a C1 to C20 alkyl group which may be branched or linear and wherein the aromatic ring substituent corresponds to a meta- or para-configuration, and further wherein Polymer A consists essentially of recurring units derived from propylene and ethylene, wherein the propylene content is from 51 to 99 percent based on total number average molecular weight of Polymer A with the balance to 100 percent being derived from ethylene.

10. Use as an additive to polymer materials of a diblock copolymer of the following general structure: 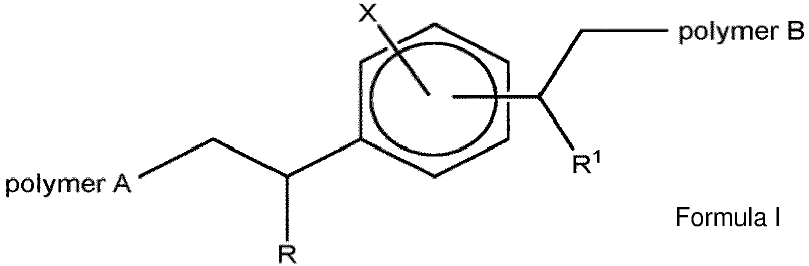 where R and R1 may be the same or different and each independently represents an alkyl or aryl group, X may be hydrogen or a C1 to C20 alkyl group which may be branched or linear and wherein the aromatic ring substituent joined to Polymer B is positioned meta or para to the aromatic ring substituent joined to Polymer A, **characterized in that** Polymer A is a non-polar polymer formed by metallocene catalyzed polymerization of propylene with ethylene, wherein the propylene content is from 51 to 99 percent based on total number average molecular weight of Polymer A with the balance to 100 percent being derived from ethylene; and Polymer B is a polymer formed by radical catalysis of a polar monomer.
